# FASCICULE DE BREVET EUROPEEN

(11) **EP 3 740 417 B1**
(45) Date de publication et mention de la délivrance du brevet: **22.05.2024**
(21) Numéro de dépôt: 19700399.9
(22) Date de dépôt: 15.01.2019
(51) Int. Cl.: B62D 15/02, G08G 1/01, G01S 15/93, G08G 1/14, G01S 15/931, G01S 15/86

(54) **PROCÉDÉ D'ASSISTANCE AU STATIONNEMENT POUR UN VÉHICULE À MOTEUR**
PARKHILFEVERFAHREN FÜR EIN KRAFTFAHRZEUG
PARKING ASSISTANCE METHOD FOR A MOTOR VEHICLE

(30) Priorité: 18.01.2018 FR 1850413
(43) Date de publication de la demande: 25.11.2020
(73) Titulaire: Renault s.a.s, 92100 Boulogne Billancourt (FR)
(72) Inventeur: SENE, Pape, Abdoulaye, 78000 VERSAILLES (FR); GUERPILLON, Mathieu, 78280 GUYANCOURT (FR); BLOQUEAU, Pierre-Yves, 78280 GUYANCOURT (FR)
(74) Mandataire: Renault Group
(86) Numéro de dépôt international: PCT/EP2019/050873
(87) Numéro de publication internationale: WO 2019/141653

(56) Documents cités:
- DE-A1-102005 045 260
- DE-A1-102015 221 237
- US-A1- 2009 167 564
- US-A1- 2016 321 926

## Description

L'invention concerne un procédé et un système d'assistance à la conduite, et plus particulièrement pour la conduite d'un véhicule en phase de recherche d'une place de stationnement, dans l'objectif de garer le véhicule.

Un très grand nombre de véhicules sont aujourd'hui équipés de systèmes de parking automatique leur permettant de réaliser différentes manoeuvres de parking : créneau, bataille ou épi.

De la demande de brevet WO2007122861 on connaît des moyens de détection d'obstacle et des moyens d'acquisition d'information d'orientation du véhicule pour aider à la mise en stationnement du véhicule. Dans la demande EP2327608 l'environnement du véhicule est détecté pendant le parcours du véhicule pour déterminer la présence ou l'absence de place de stationnement mais la nature parallèle ou transversale de cette place de stationnement est à déterminer par le conducteur avant qu'il ne débute sa manoeuvre. Dans la demande WO2013041197, un procédé de classification de scénarios de stationnement est utilisé pour assister le conducteur lors du stationnement de son véhicule dans un emplacement de stationnement. Ce procédé repose sur l'analyse des espaces libres antérieurement croisés, or si aucun espace libre n'a encore été croisé, ce qui est souvent le cas, dans les rues de centre-ville, aucune information statistique basée sur l'historique ne peut être utilisée. En outre, ce procédé suppose qu'un seul mode d'analyse de l'environnement et in fine de classification de place de stationnement a été utilisé. Or il peut être avantageux d'utiliser différents modes d'analyse de l'environnement du véhicule pour robustifier la détermination du type de la place de stationnement. Dans la demande dont le numéro de dépôt est FR1756900 le procédé d'assistance à la conduite sélectionne le type de manoeuvre de parking susceptible d'être exécutée par le système de parking automatique en fonction d'un historique de l'environnement du véhicule basé sur la reconnaissance des positions des véhicules stationnés. Or il peut être avantageux d'utiliser différents modes de détermination des places de stationnement disponibles dans l'environnement du véhicule pour robustifier la détermination du type de la place de stationnement et la sélection de la meilleure. Dans la demande US2016/321926 est divulguée une méthode d'identification de place de stationnement potentielle mise en oeuvre au moyen d'un traitement de données recueillies par différents véhicules et transmis à un système central extérieur qui les analyse statistiquement par section de rue d'une carte de référence et renvoie ensuite au véhicule intéressé une information représentative de la disponibilité de stationnement dans la rue parcourue. Cette méthode nécessite un système de reconnaissance du positionnement du véhicule très précis pour reporter les données recueillies sur la carte de référence et requiert une communication avec le système central pour fonctionner ainsi qu'une collection des données par une multitude de véhicules afin que l'information issue de l'analyse statistique soit utilisable. DE 10 2005 045260 A1 révèle par ailleurs les caractéristiques du préambule des revendications 1 et 8.

Un des buts de l'invention est de remédier à au moins une partie des inconvénients de la technique antérieure en fournissant un procédé d'assistance au stationnement de véhicule à moteur et notamment de sélection de type d'emplacement de stationnement.

A cette fin, l'invention propose un procédé d'assistance au stationnement de véhicule à moteur et notamment de sélection de type d'emplacement de stationnement, comprenant les étapes suivantes :
- détermination de caractéristiques de l'environnement du véhicule à moteur au moyen de capteurs d'environnement du véhicule à moteur.
- caractérisation d'au moins un type d'emplacement de stationnement par au moins deux modes de détermination différents le type d'emplacement comportant le type d'emplacement en épi et/ou le type d'emplacement en créneau et/ou le type d'emplacement en bataille,
ledit procédé comportant également une étape de :
- évaluation d'au moins un indice de confiance lié à chacun des modes de détermination,
- sélection automatique d'un type d'emplacement de stationnement en fonction desdits au moins un indice de confiance

Ledit procédé étant caractérisé en ce que les au moins deux modes de détermination sont un mode par prédiction reposant sur une analyse statistique des obstacles proches définis par des macro-objets et un mode par détection reposant sur une analyse des espaces libres dans une zone environnante du véhicule à moteur.

Grâce à l'invention, le type de place d'emplacement de stationnement est sélectionné automatiquement de manière robuste.

Cela permet d'utiliser deux modes qui se complètent l'un l'autre pour robustifier au mieux la sélection automatique, le conducteur n'a donc pas à sélectionner la place de stationnement lui-même.

Selon une autre caractéristique avantageuse, le mode par prédiction comporte des étapes de :
- établissement d'une cartographie dynamique d'une zone déterminée à proximité du véhicule,
- création, catégorisation et pondération des macro-objets de la cartographie,
- calcul statistique d'un indice de confiance par type d'emplacement de stationnement prédit en fonction desdits macro-objets de la cartographie,
- détermination du type d'emplacement de stationnement prédit en fonction du plus élevé des indices de confiance déterminés de chaque type d'emplacement. Cela permet d'évaluer le type d'emplacement de stationnement prédit résultant du premier mode de détermination de manière à le rendre comparable à un résultat obtenu par un autre mode.

Selon une autre caractéristique avantageuse, l'indice de confiance calculé est fonction des caractéristiques géométriques des macro-objets catégorisés comme étant des véhicules stationnés et de la pondération liée à la distance par rapport audit véhicule à moteur des macro-objets catégorisés comme étant des véhicules stationnés, ce qui permet ensuite d'obtenir des statistiques cohérentes avec les évolutions relevées dans l'historique et non des statistiques basées uniquement sur le quantitatif.

Selon une autre caractéristique avantageuse, le mode de détection comporte des étapes de :
- établissement d'une cartographie desdits espaces libres dans une zone environnante du véhicule à moteur,
- vérification qu'une trajectoire existe pour rejoindre un espace libre détecté,
- détermination d'un indice de confiance pour chaque type d'emplacement de stationnement en fonction dudit espace libre détecté,
   - détermination du type d'emplacement de stationnement détecté en fonction du plus élevé des indices de confiance déterminés de chaque type d'emplacement. Cela permet d'évaluer le type d'emplacement de stationnement détecté résultant du second mode de détermination de manière à le rendre comparable au résultat obtenu par le premier mode.

Selon une autre caractéristique avantageuse, l'indice de confiance déterminé est fonction des dimensions de l'espace libre et/ou des obstacles bordant l'espace libre et/ou de la nature desdits obstacles bordant l'espace libre, ce qui permet de fonder cet indice de confiance sur des données tangibles et mesurables finement.

Selon une autre caractéristique avantageuse, ladite étape de sélection du procédé comporte également les étapes de :
- comparaison entre le type d'emplacement de stationnement prédit et le type d'emplacement de stationnement détecté,
- si les deux types sont identiques sélection de l'emplacement détecté, sinon
- correction de chaque indice de confiance en fonction de données de contexte d'établissement de chacune des cartographies, notamment en fonction d'informations météorologiques,
- comparaison des indices de confiance corrigés de chaque type d'emplacement,
- si l'emplacement détecté a un meilleur indice de confiance corrigé que l'emplacement prédit, sélection de l'emplacement détecté,
- sinon, calcul d'une trajectoire,
- si une trajectoire existe sélection de l'emplacement prédit,
- sinon poursuite du procédé par avancement du véhicule.

Cela permet de prendre en considération les conditions d'acquisition des données pour l'établissement de chacune des cartographies.

L'invention concerne un programme d'ordinateur comportant des instructions qui, lorsqu'exécutées par un processeur d'un système informatique, entraînent la mise en oeuvre du procédé. Ce programme d'ordinateur présente des avantages analogues à ceux du procédé.

L'invention concerne un système d'assistance au stationnement de véhicule à moteur et notamment de sélection de type d'emplacement de stationnement, pouvant être embarqué dans un véhicule, ledit système comprenant des moyens de :
- détermination de caractéristiques de l'environnement du véhicule à moteur au moyen de capteurs d'environnement du véhicule à moteur,
- caractérisation d'au moins un type d'emplacement de stationnement par au moins deux moyens de détermination différents, le type d'emplacement comportant le type d'emplacement en épi et/ou le type d'emplacement en créneau et/ou le type d'emplacement en bataille,

ledit système comportant également des moyens de :
   - évaluation d'au moins un indice de confiance lié à chacun des moyens de détermination,
   - sélection automatique d'un type d'emplacement de stationnement en fonction desdits au moins un indice de confiance.
ledit système étant caractérisé en ce que les au moins deux modes de détermination sont un mode par prédiction reposant sur une analyse statistique des obstacles proches définis par des macro-objets et un mode par détection reposant sur une analyse des espaces libres dans une zone environnante du véhicule à moteur.

Ce système présente des avantages analogues à ceux du procédé.

Selon une autre caractéristique avantageuse, les capteurs d'environnement utilisés pour la détection d'un emplacement et pour la prédiction d'un emplacement sont au moins un capteur ultrasons et au moins un capteur odométrique, ce qui permet une complémentarité des moyens de mesure.

L'invention concerne un véhicule comportant un tel système d'assistance. Ce véhicule présente des avantages analogues à ceux du système.

D'autres caractéristiques et avantages apparaîtront à la lecture d'un mode de réalisation préféré décrit en référence aux figures dans lesquelles:
- la figure 1 représente une chaîne de blocs de traitement apte à la mise en oeuvre du procédé selon l'invention ; et,
- la figure 2 représente une sous-chaîne de blocs de traitement apte à la mise en oeuvre du procédé selon l'invention ; et,
- la figure 3 représente schématiquement un mode de cartographie, à laquelle l'invention peut être appliqué ; et,
- la figure 4 représente une sous-chaîne de blocs de traitement apte à la mise en oeuvre du procédé selon l'invention ; et,
- la figure 5 est un organigramme d'un bloc de traitement apte à la mise en oeuvre du procédé selon l'invention.

Dans l'ensemble du texte les directions et orientations sont désignées en référence à un repère orthonormé direct XYZ classiquement utilisé en conception automobile, dans lequel X désigne la direction longitudinale du véhicule, dirigé vers l'avant, Y est la direction transversale au véhicule, dirigé vers la gauche et Z est la direction verticale dirigée vers le haut. Les notions « avant » et « arrière » sont indiquées en référence au sens de marche normal vers l'avant du véhicule. Dans l'ensemble de la description le terme « sensiblement » signifie qu'un léger écart peut être admis par rapport à une position ou orientation nominale déterminée, par exemple « sensiblement vertical » signifie qu'un écart de l'ordre de 10° par rapport à une orientation strictement verticale est admis dans le cadre de l'invention. Pour plus de clarté, les éléments identiques ou similaires sont repérés par des signes de référence identiques sur l'ensemble des figures.

Pour robustifier la détermination du type de la place de stationnement et la sélection automatique du type de place de stationnement, différents modes de détermination peuvent être utilisés. Il peut s'agir de modes reposant sur des types de mesures différents, utilisant des capteurs différents mais il peut aussi s'agir préférentiellement :
- d'un premier mode qui est un mode de prédiction de place de stationnement basé sur la statistique et la pondération des historiques des places de stationnement occupées déjà croisées par le véhicule qui cherche une place et
- d'un autre mode qui est un mode de détection des places de stationnement en fonction de l'environnement mesuré à proximité du véhicule et des manoeuvres réalisables.

Le mode de détection est disponible sur tout véhicule avec un niveau d'automatisation du parking. Néanmoins ce mode peut identifier une place en créneau alors qu'il s'agit de deux places libres consécutives en bataille situées entre d'autres véhicules stationnés. Quant à lui, le mode de prédiction, nécessite un environnement riche en véhicules. Il ne suffit pas à lui seul à détecter s'il y a un emplacement libre réel puisqu'il analyse les places occupées par des véhicules stationnés en analysant plus particulièrement ces véhicules stationnés. Il est donc utile de pouvoir recourir à ces deux modes de détermination des places de stationnement et de pouvoir arbitrer quand des résultats différents résultent des deux modes utilisés pour sélectionner le type de place le plus probable et la manoeuvre afférente permettant de s'insérer dans cette place.

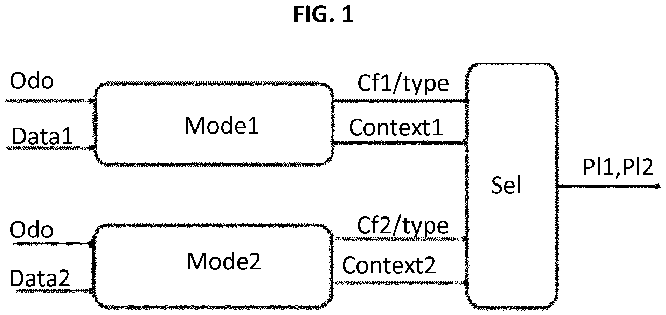

Un mode préférentiel de réalisation de l'invention est représenté à la **figure** 1 qui illustre schématiquement les macro-blocs de traitement et leur enchaînement pour la mise en oeuvre du procédé selon l'invention. Ainsi, les macro-blocs illustrant les deux modes de détermination Mode1 et Mode2 du type d'emplacement de stationnement sont représentés l'un au-dessus de l'autre et ont pour entrées des données d'odométrie Odo et des caractéristiques de l'environnement du véhicule déterminées au moyen de capteurs d'environnement fonction du mode en question Data1 et Data2. De plus, les sorties de ces deux modes Mode1 et Mode2 sont des indices de confiance par type d'emplacement de stationnement (épi, créneau, bataille) Cf1/type et Cf2/type et des données de contexte liées à chacun des modes Context1 et Context2 comportant par exemple les données d'environnement retraitées ou non du mode en question et des informations liées aux conditions météorologiques qui peuvent plus ou moins affecter les capteurs de mesure des données d'environnement du mode en question. Puis ces sorties des deux modes Mode1 et Mode2 entrent dans le macro-bloc de Sélection Sel automatique, qui est décrit plus précisément par une figure suivante, et dont la sortie est le type d'emplacement de stationnement Pl1 ou Pl2 libre disponible accessible par manoeuvre.

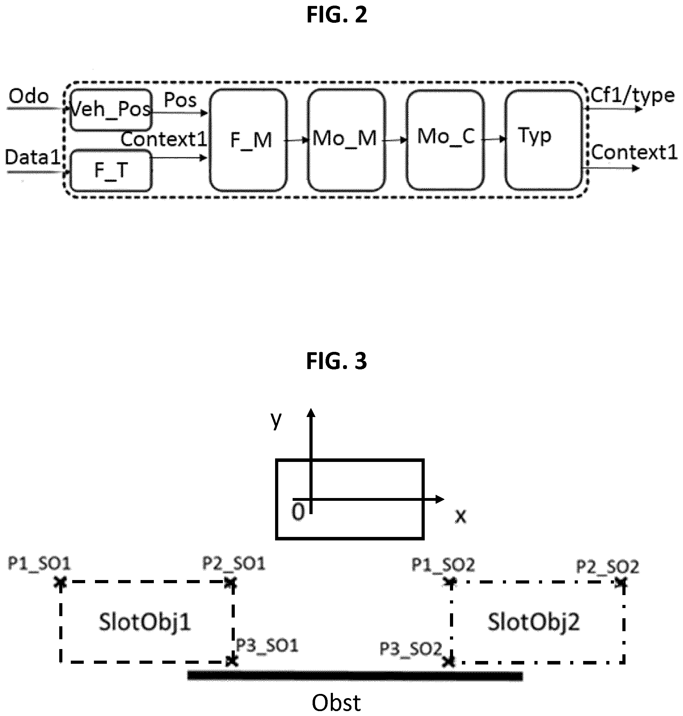

Sur la **figure** 2 est représentée la sous-chaîne de blocs de traitement qui correspond au premier mode de détermination Mode1 du type d'emplacement de stationnement par prédiction. Ce mode par prédiction repose sur l'identification des types de places déjà occupées dans l'environnement du véhicule pour établir une prédiction de type de place pour une future place disponible. En tant que tel, ce mode ne visualise pas de place de stationnement disponible. Afin établir sa prédiction, ce mode repose sur quatre sous-fonctions:
- établir un historique des éléments dans la zone considérée,
- créer des macro-objets à partir des éléments pertinents
- catégoriser et pondérer les macro-objets
- regrouper et analyser les statistiques dans le but de choisir le type d'emplacement le plus probable.

Il s'agit donc d'un mode reposant sur les statistiques et pouvant faire intervenir des calculs de probabilités. Plus précisément, les entrées de cette sous-chaine sont :
- les données odométriques Odo, provenant de plusieurs capteurs odométriques tels que des quatre capteurs de roue, un capteur d'angle au volant et éventuellement un gyromètre,
- les caractéristiques de l'environnement du véhicule déterminées au moyen de capteurs d'environnement du mode en question Data1, ici, il s'agit notamment de données issues des signaux d'au moins un sonar, c'est-à-dire de points et de nuages de points pouvant former des segments dont l'angle par rapport à la direction du véhicule au moment de la détection représente l'orientation du segment. Il s'agit préférentiellement de douze capteurs ultrasons ou lidars placés au niveau du bouclier, les points relevés correspondent donc aux obstacles situés dans l'environnement du véhicule. En effet, un ultrason envoie un signal sonore en forme de cône. Ce cône peut être déformé par un élément en forme d'entonnoir pour couvrir une zone élargie. En fonction de l'intensité du signal réfléchi, le temps entre l'émission et la réception et de l'angle d'incidence de celui-ci, on peut en déterminer la position, la taille et la forme de l'objet. Cet écho est généralement plus intense au niveau des capteurs mais des objets à différentes hauteurs peuvent être détectés si l'objet en question est orienté de manière à avoir un écho suffisamment fort. Etant donnée la géométrie des véhicules stationnés cela est rare que l'écho provienne de zone situées beaucoup plus haut que les capteurs mais cela est possible, en revanche les réflexions au sol et sur les trottoirs sont courantes.

Le bloc de détermination du positionnement du véhicule Veh_Pos définit la position et le comportement du véhicule dans le référentiel global. Il prend en entrée toutes les données odométriques disponibles et calcule la position et le comportement du véhicule ou plus exactement un « delta » représentatif de l'écart de distance avec l'instant précédent. Il s'agit donc de calculer la distance parcourue par le véhicule et de se servir des différentes positions Pos obtenues chronologiquement comme référence pour cartographier le reste de l'environnement.

Le bloc de transformation des traits F_T est un bloc optionnel de transformation des données brutes initiales (si par exemple les données brutes issues du sonar sont un angle et un point et que le format des données préféré pour la suite du traitement par prédiction est la description du même segment en utilisant la définition de deux points). En sortie de ce bloc de transformation F_T sont les données de contexte liées au premier mode Context1, ce qui regroupe à la fois les données en tant que telles (transformées ou non) et les caractéristiques de qualité de ces données en fonction des conditions d'usage des capteurs utilisés (météorologie, vitesse, incertitude sur la localisation).= Le bloc de cartographie des traits F_M trie les obstacles (bas ou haut), filtre (probabilité d'existence du point relevé en fonction par exemple de l'intensité du signal par rapport au bruit résiduel) et met à jour un historique de tous les éléments, c'est à dire les obstacles, détectés dans une zone.

Le bloc de cartographie des macro-objets Mo_M détermine, à partir de la liste des éléments extraite à l'étape précédente, ce que l'on appelle les « macro-objets » qui représentent les « vrais » obstacles perçus, il s'agira ensuite de les classer notamment entre la catégorie véhicule et la catégorie incertain. Les règles qui régissent les critères de la création d'un macro-objet sont par exemple les suivantes :
- Si un élément ou un macro objet est proche d'une distance seuil (environ 15 cm si un élément est concerné et environ 30 cm quand deux macro-objets sont concernés) d'un autre élément ou d'un macro-objet alors ils sont fusionnés en un macro-objet ; en effet, dans le cas de deux voitures garées en bataille pour sortir du véhicule il faut au minimum trente centimètres (ce qui correspond au premier cran de portière), dans le cas de deux voiture garées en créneau pour permettre la sortie du véhicule de la place il y a besoin d'au moins 20 cm de chaque côté. Dans le cas où deux véhicules sont garés côte à côte en bataille en quinconce, les conducteurs sortant par les côtés opposés dégagés et les rétroviseurs étant repliés, il est possible, si les véhicules sont de même longueur et très rapprochés qu'ils soient assimilés à un seul macro-objet, et de même quand deux véhicules sont garés l'un derrière l'autre en créneau et que les pare-chocs se touchent,
- Si un macro-objet est un segment de dimension inférieure à 50 cm, alors il n'est pas considéré car on suppose que c'est du mobilier urbain;
- Si le nombre de macro-objets est supérieur à la limite fixée, alors les macro-objets les plus éloignés par rapport à la position actuelle du véhicule sont supprimés ;-
- Si un macro-objet est considéré comme un objet bas en dehors de la zone de détection il est supprimé afin, notamment, de ne pas prendre en considération le mobilier urbain ou les trottoirs.

Une fois la liste des macro-objets définie, il est nécessaire d'évaluer certaines propriétés de ces objets (telles que l'angle, la longueur des segments, le pourcentage d'objets hauts et d'objets bas qui composent le macro-objet, la somme des abscisses, la somme des ordonnées, la somme des abscisses au carré, la somme du produit abscisses - ordonnées) pour synthétiser les informations et ainsi éviter de garder l'ensemble des points qui ont été regroupés dans ce macro objet sans perte d'information. Dans le cas présent, les objets peuvent être représentés de manière simple par un segment, ainsi les propriétés utiles qui permettent de caractériser les objets par la suite sont : les coordonnées (x, y), l'angle du segment par rapport au véhicule, le côté (si l'objet a été détecté à droite ou à gauche du véhicule), etc...

Le bloc de catégorisation des macro-objets Mo_C a pour but de catégoriser les macro-objets en 4 groupes et de déterminer leur « poids » dans la prédiction en cours. Les 4 groupes sont les suivants :
- Incertain : obstacles indéterminés (les troncs des arbres entre les places de stationnement occupées par exemple), c'est-à-dire autres obstacles que des véhicules (en fonction du filtrage par taille de segment notamment, ainsi les macro-objets de plus de 7m environ seront classés comme incertains telles deux voitures garées en créneau dont les pare-chocs se touchent) ;
- les véhicules : qui sont sous-catégorisés en
   ∘ Epi ;
   ∘ créneau ;
   ∘ bataille.

Pour la sous-catégorisation, les propriétés suivantes sont testées :
- La longueur du segment (ce qui permet par exemple de déterminer s'il s'agit en fonction des gabarits de véhicules s'il s'agit plutôt d'une face avant ou latérale de véhicule) ;
- L'orientation (angle) du segment ;
- L'espace entre le macro-objet le plus proche à l'arrière et celui considéré ;
- L'espace entre le macro-objet le plus proche à l'avant et celui considéré.

Pour chacune de ces propriétés des seuils minimax et/ou maximaux sont déterminés en fonction des sous-catégories. Ces seuils sont basés sur les gabarits type des véhicules et sur les angles types des placements en épi tout en prenant en compte que les véhicules ne sont pas toujours parallèles aux lignes et peuvent donc présenter des orientations sensiblement différentes entre eux. Une profondeur minimum d'environ trois à quatre mètres est également requise pour pouvoir conclure à un stationnement en épi ou en bataille. Pour un stationnement en bataille, il est attendu que le macro-objet soit sorti de la visualisation pour le sous-catégoriser. La prise en compte des motocycles en plus des véhicules demande une adaptation en utilisant par exemple des caméras et une diversification de gabarits, de même pour la prise en compte des remorques en tant que telles afin qu'elles ne soient pas confondues avec des véhicules. Préférentiellement, une fois la catégorisation terminée, une étape de pondération est réalisée, un poids (de valeur entre 0 et 1) est attribué à l'objet catégorisé en fonction de son éloignement par rapport au véhicule qui cherche à se stationner. Par exemple, on peut définir :
- une première bande large de 15m par rapport à l'axe d'avancement du véhicule qui va de 20m selon la direction longitudinale x à l'arrière de l'essieu arrière du véhicule qui cherche à se stationner jusqu'à 10 m à l'avant de l'essieu arrière du véhicule qui cherche à se stationner, où le poids est de 1,
- une deuxième bande de même largeur qui s'étire de 20m à 25 m en arrière de l'essieu arrière du véhicule qui cherche à se stationner, où le poids est de 0,8,
- une troisième bande de même largeur qui s'étire de 25m à 30 m en arrière de l'essieu arrière du véhicule qui cherche à se stationner, où le poids est de 0,3.

Si le macro-objet se situe entre deux zones, le poids choisi est le plus élevé des deux zones concernées. Cette pondération n'est pas normalisée en l'état mais correspond à une probabilité qu'une place libre détectée au niveau de la voiture soit du même type que les voitures garées dans la zone autour du véhicule. Il s'agit donc préférentiellement d'une loi de probabilité discrète en fonction de la distance au véhicule.

Enfin, le bloc de typage statistique de l'emplacement de stationnement Typ est une étape de traitement qui synthétise toutes les informations précédentes (notamment liées aux macro-objets « véhicule » sous-catégorisés en épi, bataille ou créneau et poids associé en fonction de leur éloignement) dans le but de prendre une décision sur la prédiction du prochain type d'emplacement de stationnement. Pour ce faire, les places situées à gauche du véhicule qui cherche à se stationner sont traitées séparément de celles situées à droite du véhicule qui cherche à se stationner. Pour chaque sous-catégorie de « véhicules » est alors générée la somme pondérée de tous les véhicules de cette sous-catégorie. On obtient alors un indice de confiance pour chaque type de la place Cf1/type recalculé en temps réel en fonction de l'historique statistique passé.

Bien entendu, il s'agit ici d'un mode de réalisation préférentiel mais d'autres variantes, notamment de calculs des pondérations et des indices de confiance, sont envisageables.

La **figure** 3 illustre une cartographie par mode de détection de l'environnement véhicule et plus spécifiquement de l'environnement proche d'une place de stationnement libre. En effet, les données odométriques Odo, proviennent de plusieurs capteurs odométriques tels que des quatre capteurs de roue, un capteur d'angle au volant et éventuellement un gyromètre,et les caractéristiques de l'environnement du véhicule sont déterminées au moyen de capteurs d'environnement du mode de détection en question Data2, ici, il s'agit notamment de données issues des signaux de type ultrasons ou lidars, préférentiellement de douze capteurs ultrasons Ainsi ces données permettent de décrire l'environnement du véhicule, elles fournissent notamment les contours, c'est-à-dire les limites des espaces libres environnant le véhicule qui cherche à se stationner. En effet, sont fournies les coordonnées spatiales des extrémités des obstacles qui bordent ces espaces libres, tels que des véhicules garés par exemple. Ainsi, sur cette figure le véhicule embarquant le système d'assistance au stationnement, est représenté en trait continu. L'axe du repère de la cartographie ainsi réalisée se trouve au centre de l'essieu arrière du véhicule cherchant un emplacement de stationnement. Comme précédemment, la cartographie est donc dynamique, et se complète au fur et à mesure que le véhicule avance. Une fois une certaine distance passée, par exemple vingt mètres, les données de la cartographie sont effacées de manière à ne pas consommer trop d'espace de stockage. Les limites extérieures des obstacles sont décrites par les coordonnées des coins, ainsi pour le premier objet SlotObj1, représenté en traits pointillés, les coordonnées des points P1_SO1, P2_SO1, P3_SO1 sont relevées et pour le second objet SlotObj2, représenté en traits discontinus, les coordonnées des points P1_SO2, P2_SO2, P3_SO2 sont relevées ainsi que la présence ou non d'un obstacle Obst en fond de place de type trottoir ou mur. De même, dans le cas où un arbre est détecté il sera représenté par exemple sous forme d'un carré de côté le diamètre de l'arbre.

En variante un troisième mode pourrait être combiné et ce mode utiliserait des données issues de caméras pour le repérage des lignes au sol par exemple.

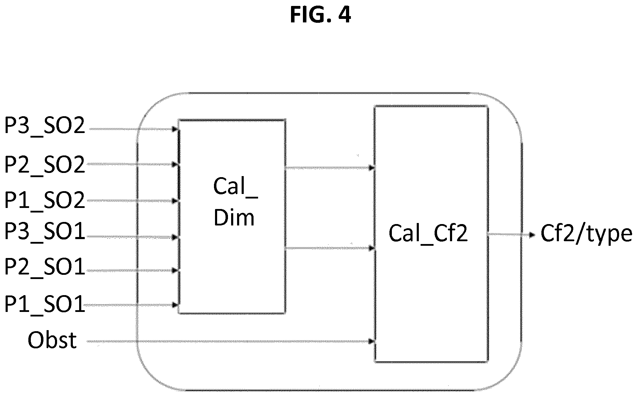

En **figure 4****,** on représente une sous-chaîne de blocs du macro-bloc du mode de détection Mode2. On constate que les coordonnées citées précédemment constituent l'entrée de la sous-chaîne de blocs de traitement du mode de détection permettant la détermination de l'indice de confiance par type d'emplacement de stationnement obtenu par mode de détection Cf2/type. Pour ce faire, on extrait les données sur la place libre (profondeur et largeur) en fonction des coordonnées des trois points de coordonnées de chaque objet SlobObj1 et SlotObj2 avec le bloc de traitement de calcul de dimension Cal_Dim.

Par simplification on obtient:
- la profondeur de la place libre = √((y_P3S01-y_P2S01 )^2+(x_P2SO1- x_P3SO1)^2))
- la largeur de la place libre = √((y_P2S01-y_P2S02 )^2+(x_P2SO2-x_P2SO1)^2 )).

Puis, pour le bloc de calcul d'indice de confiance par mode de détection Cal_Cf2, de nombreuses méthodes existent. Pour des raisons de simplicité de réglages et d'adaptabilité à la performance de détection des différents systèmes d'ultrasons, une méthode à points a été choisie. On affecte donc un nombre de points, c'est-à-dire un score (0.2, 1, 0, 5,...) pour chaque type d'emplacement détecté en fonction de l'environnement de cette détection. Ces éléments d'environnement correspondent à un ensemble d'éléments de l'environnement lié à la place ainsi détectée :
Fond de place : Si la place détectée présente un fond de place délimitée par un trottoir ou un mur.

Obstacles délimitant la place : Si la place détectée est délimitée par des obstacles (deux) ou un seul.

Taille de la place : Il s'agit de la profondeur et de la largeur de la place. Ces informations sont calculées en fonction des données brutes Data2 en entrée du macro-bloc du mode de détection Mode2.

Pour chacun des éléments de l'environnement un score va être attribué à chaque type d'emplacement (épi, bataille, créneau). Ces scores sont choisis de manière empirique afin d'obtenir le taux de discrimination le plus élevé. Pour obtenir l'indice de confiance de chaque type d'emplacement Cf2/type on fait la somme de tous les scores obtenus pour chaque élément.

Ce système à points peut se présenter par exemple sous la forme suivante :

| **Elément de l'environnement** | **score pour le type d'emplacement en bataille** | **score pour le type d'emplacement en créneau** | **score pour le type d'emplacement en épi** |
|---|---|---|---|
| Trottoir détecté en fond de place | 0.2 | 1 | 0 |
| Obstacles délimitant la place | 2 si deux côtés 0.5 si un seul | 0.1 si deux cotés | 5 si deux côtés 2 si un seul |
| Profondeur de place | Score en fonction de la profondeur par exemple -1 entre 1m et 4m et 0 sinon. | Score en fonction de la profondeur par exemple 1 entre 1m et 4m et 0 sinon. | Score en fonction de la profondeur Par exemple 0 (non discriminant) |
| Mur en fond de place | 0.2 | 1.5 | 0 |
| Largeur de la place | Score en fonction de la largeur. Par exemple : 1 entre 1.5m 3, 0 sinon | Score en fonction de la largeur Par exemple : -1 entre 1.5m et 3m, 0 sinon | Score en fonction de la largeur Par exemple : 1 entre 1.5m 3m, 0 sinon |

Ces seuils sont donnés à titre d'exemple et pourraient être combinés à des lois de probabilité du type Beta. Cette approche reste valable quelle que soit la source des données d'environnement (sonar, radar, lidar). Plus l'environnement est déterminable sur la base des données d'entrée caractéristiques de l'environnement du véhicule déterminées au moyen de capteurs d'environnement fonction du mode de détection Data2, plus la certitude quant au type d'emplacement détecté sera élevée.

Les scores sont ensuite normalisés par un coefficient de normalisation pour aboutir aux indices de confiance par mode de détection (Cf2/type) comparables aux indices de confiance par mode de prédiction (Cf1/type).

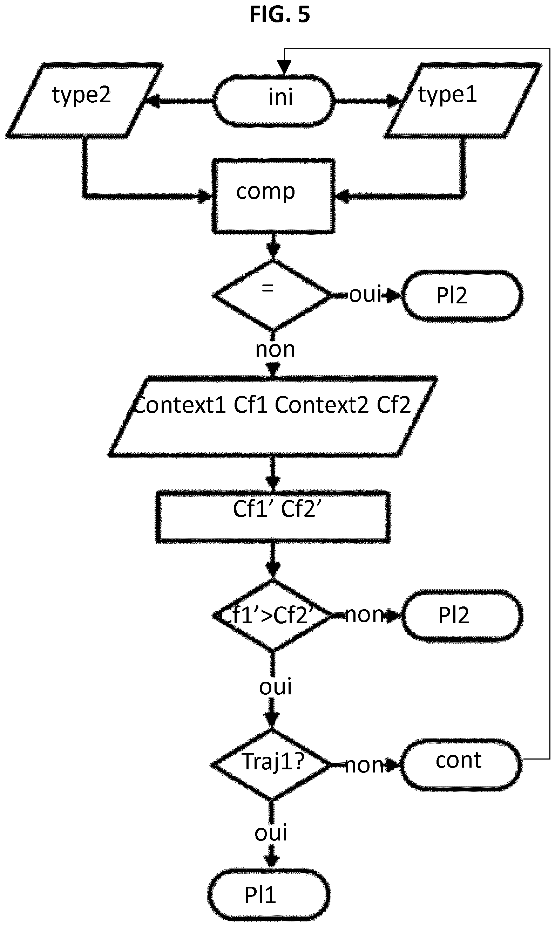

Sur la **figure 5** est un organigramme du procédé d'assistance conforme à l'invention représentant l'algorithme de décision du macro-bloc de sélection automatique Sel illustré précédemment. Nous considérons dans cette figure que le premier mode correspond à un mode de prédiction et que le second mode correspond à un mode de détection. Le premier état initial ini de l'algorithme correspond à un état neutre, c'est-à-dire qu'il ne définit aucun type d'emplacement de stationnement. Puis on définit le type d'emplacement déterminé par chacun des macro-modes Mode1 et Mode2, c'est-à-dire que le type d'emplacement déterminé par le premier mode type1 correspond au type d'emplacement déterminé par le premier mode qui avait le plus haut indice de confiance Cf1/type. De même pour le type d'emplacement déterminé par le second mode type2. L'étape suivante procède à la comparaison comp des types d'emplacement déterminés par chacun des modes type1 et type2, et
- si les deux types sont les mêmes =, par exemple les deux modes ont abouti à un type épi alors le type de place libre disponible accessible par manoeuvre correspond au type d'emplacement déterminé par le second mode (par exemple, le choix aurait pu être aussi bien lié au premier mode puisque les deux modes mènent au même résultat) Pl2, c'est-à-dire en épi.
- Sinon, les données de contexte liées à chacun des modes Context1 et Context2 sont prises en compte pour pondérer les indices de confiance par type d'emplacement de stationnement obtenu par chaque mode Cf1/type et Cf2/type.

Ces données de contexte Context1 et Context2 permettent d'établir un facteur de qualité de détection pour chacun des modes en fonction des facteurs externes (météorologie, vitesse...), ce facteur s'échelonnant entre 0 et 1, Ils permettent aussi d'homogénéiser les deux méthodes afin d'obtenir le taux de bonne décision le plus élevé. En effet, par exemple, si dans le premier mode seuls des capteurs à ultrasons sont utilisés pour mesurer les caractéristiques d'environnement propres au premier mode Data1, sans procéder à une fusion de données avec d'autres capteurs, et qu'il pleut, alors le facteur de qualité du premier mode sera plus ou moins faible en fonction de l'intensité de la pluie dont les gouttes peuvent refléter les ultrasons et ainsi donner lieu à des fausses détection. On va alors pondérer les indices de confiance par type d'emplacement de stationnement obtenus par chaque mode Cf1/type et Cf2/type par ces facteurs de qualités propres à chacun des modes, donnant lieu aux indices de confiance corrigés propres à chaque mode pour son type préférentiel (ayant le plus haut indice) Cf1' et Cf2'. Dans le rare cas où les deux indices de confiances corrigés Cf1' et Cf2' sont trop proches (5% de différence entre eux par exemple) et désignent deux types d'emplacements différents alors aucun choix ne sera fait et il faut donc continuer cont en marche avant (cette branche n'apparait pas sur la figure pour ne pas la surcharger).

Ces indices de confiance corrigés propres à chaque mode Cf1' et Cf2' sont alors comparés Cf1'>Cf2 et
- si l'indice lié au second mode l'emporte alors le type de place libre disponible accessible par manoeuvre correspond au type d'emplacement déterminé par le second mode Pl2 ;
- sinon, une étape de vérification de trajectoire Traj1? est activée, il s'agit de vérifier qu'une trajectoire existe pour rejoindre le type d'emplacement déterminé par le premier mode P!1. En effet, cela est lié au fait que si on considère, comme indiqué précédemment, que le premier mode correspond à un mode de prédiction et que le second mode correspond à un mode de détection, il est important de vérifier que l'emplacement déterminé par le premier mode Pl1 est bien associé à une manoeuvre réalisable. Pour ce faire, un module de calcul de trajectoire prenant par exemple en entrée le type d'emplacement déterminé par le premier mode P!1, la localisation de celle-ci par rapport au véhicule, les dimensions de ce véhicule et certaines données mécaniques (rapport de démultiplication de la direction, angle de braquage max,...), l'angle de braquage initial du véhicule calcule si une trajectoire est possible en utilisant par exemple des méthodes d'optimisation et/ou avec des méthodes prenant en compte le braquage maximal autorisé du véhicule.

Si cette trajectoire pour rejoindre le type de place déterminé par le premier mode Traj1 existe alors le type de place libre disponible accessible par manoeuvre correspond au type d'emplacement déterminé par le premier mode Pl1 et sinon cela signifie qu'il n'y a pas de trajectoire disponible jusqu'à cet emplacement et qu'il faut donc continuer cont en marche avant car aucune place ne satisfait aux besoins du parking automatique (par exemple la position est trop excentrée et un braquage initial trop important peut rendre impossible le calcul d'une trajectoire). Bien entendu, le conducteur peut toujours s'il le souhaite garder la main et effectuer la manoeuvre qu'il souhaite par lui-même.

## Revendications

1. Procédé d'assistance au stationnement d'un véhicule à moteur, ledit procédé étant embarqué dans le véhicule et comprenant les étapes suivantes :
- détermination de caractéristiques de l'environnement du véhicule à moteur au moyen de capteurs d'environnement du véhicule à moteur,
- caractérisation d'au moins un type d'emplacement de stationnement par au moins deux modes de détermination différents (Mode1, Mode2), le type d'emplacement comportant le type d'emplacement en épi et/ou le type d'emplacement en créneau et/ou le type d'emplacement en bataille,
ledit procédé comportant également une étape de :
- évaluation d'au moins un indice de confiance lié à chacun des modes de détermination (Cf1/type, Cf2/type, Cf1, Cf2, Cf1', Cf2'),
- sélection (Sel) automatique d'un type d'emplacement de stationnement (Pl1, Pl2) en fonction desdits au moins un indice de confiance (Cf1/type, Cf2/type, Cf1, Cf2, Cf1', Cf2'),
ledit procédé étant **caractérisé en ce que** les au moins deux modes de détermination (Mode1, Mode2) sont un mode par prédiction (Mode1) reposant sur une analyse statistique des obstacles proches définis par des macro-objets et un mode par détection (Mode2) reposant sur une analyse des espaces libres dans une zone environnante du véhicule à moteur.

2. Procédé selon la revendication 1, **caractérisé en ce que** le mode par prédiction (Mode1) comporte des étapes de :
- établissement d'une cartographie dynamique (F_M) d'une zone déterminée à proximité du véhicule,
- création (Mo_M), catégorisation (Mo_C) et pondération des macro-objets de la cartographie,
- calcul statistique (Typ) d'un indice de confiance (Cf1/type) par type d'emplacement de stationnement prédit en fonction desdits macro-objets de la cartographie,
- détermination du type d'emplacement de stationnement prédit (type1) en fonction du plus élevé des indices de confiance déterminés de chaque type d'emplacement (Cf1/type).

3. Procédé selon la revendication précédente, **caractérisé en ce que** l'indice de confiance calculé (Cf1/type) est fonction des caractéristiques géométriques des macro-objets catégorisés comme étant des véhicules stationnés et de la pondération liée à la distance par rapport audit véhicule à moteur des macro-objets catégorisés comme étant des véhicules stationnés.

4. Procédé selon l'une quelconque des revendications 1 à 3, **caractérisé en ce que** le mode de détection (Mode2) comporte des étapes de :
- établissement d'une cartographie desdits espaces libres dans une zone environnante du véhicule à moteur,
- vérification qu'une trajectoire existe pour rejoindre un espace libre détecté,
- détermination (Cal_Cf2) d'un indice de confiance pour chaque type d'emplacement de stationnement (Cf2/type) en fonction dudit espace libre détecté,
- détermination du type d'emplacement de stationnement détecté (type2) en fonction du plus élevé des indices de confiance déterminés de chaque type d'emplacement (Cf2/type).

5. Procédé selon la revendication précédente, **caractérisé en ce que** l'indice de confiance déterminé (Cf2/type) est fonction des dimensions de l'espace libre et/ou des obstacles bordant l'espace libre et/ou de la nature desdits obstacles bordant l'espace libre.

6. Procédé selon l'une quelconque des revendications 4 et 5 **caractérisé en ce que** ladite étape de sélection (Sel) du procédé comporte également les étapes de :
- comparaison (comp) entre le type d'emplacement de stationnement prédit (type1) et le type d'emplacement de stationnement détecté (type2),
- si les deux types (type1, type2) sont identiques sélection de l'emplacement détecté (Pl2), sinon
- correction de chaque indice de confiance (Cf1, Cf2) en fonction de données de contexte (Context1, Context2) d'établissement de chacune des cartographies, notamment en fonction d'informations météorologiques,
- comparaison des indices de confiance corrigés (Cf1', Cf2') de chaque type d'emplacement,
- si l'emplacement détecté a un meilleur (Cf1'>Cf2') indice de confiance corrigé (Cf2') que l'emplacement prédit (Cf1'), sélection de l'emplacement détecté (Pl2),
- sinon, calcul d'une trajectoire,
- si une trajectoire existe sélection de l'emplacement prédit (Pl1),
- sinon poursuite (cont) du procédé par avancement du véhicule.

7. Programme d'ordinateur comportant des instructions qui, lorsqu'exécutées par un processeur d'un système selon la revendication 8, entraînent la mise en oeuvre d'un procédé selon l'une des revendications 1 à 6.

8. Système d'assistance au stationnement d'un véhicule à moteur, ledit système étant embarqué dans le véhicule, ledit système comprenant des moyens de :
- détermination de caractéristiques de l'environnement du véhicule à moteur au moyen de capteurs d'environnement du véhicule à moteur,
- caractérisation d'au moins un type d'emplacement de stationnement par au moins deux moyens de détermination différents (Mode1, Mode2), le type d'emplacement comportant le type d'emplacement en épi et/ou le type d'emplacement en créneau et/ou le type d'emplacement en bataille,
ledit système comportant également des moyens de :
- évaluation d'au moins un indice de confiance lié à chacun des moyens de détermination (Cf1/type, Cf2/type, Cf1, Cf2, Cf1', Cf2'),
- sélection (Sel) automatique d'un type d'emplacement de stationnement (Pl1, Pl2) en fonction desdits au moins un indice de confiance (Cf1/type, Cf2/type, Cf1, Cf2, Cf1', Cf2'),
ledit système étant **caractérisé en ce que** les au moins deux modes de détermination (Mode1, Mode2) sont un mode par prédiction (Mode1) reposant sur une analyse statistique des obstacles proches définis par des macro-objets et un mode par détection (Mode2) reposant sur une analyse des espaces libres dans une zone environnante du véhicule à moteur.

9. Système selon la revendication précédente, **caractérisé en ce que** les capteurs d'environnement utilisés pour la détection d'un emplacement et pour la prédiction d'un emplacement sont au moins un capteur ultrasons et au moins un capteur odométrique.

10. Véhicule comportant un système d'assistance selon l'une quelconque des revendications 8 ou 9.

## Patentansprüche

1. Parkhilfeverfahren für ein Kraftfahrzeug, wobei das Verfahren in das Fahrzeug integriert ist und die folgenden Schritte beinhaltet:
- Bestimmen von Eigenschaften der Umgebung des Kraftfahrzeugs mit Hilfe von Umgebungssensoren des Kraftfahrzeugs,
- Charakterisieren mindestens eines Parklückentyps durch mindestens zwei unterschiedliche Bestimmungsmodi (Model, Mode2), wobei der Lückentyp den schrägen Lückentyp und/oder den Längslückentyp und/oder den Querlückentyp umfasst, wobei das Verfahren ferner einen folgenden Schritt umfasst:
- Bewerten mindestens eines Vertrauensindexes, der mit jedem der Bestimmungsmodi in Verbindung steht, (Cf1/type, Cf2/type, Cf1, Cf2, Cf1', Cf2'),
- automatisches Auswählen (Sel) eines Parklückentyps (Pl1, P12) in Abhängigkeit von dem jeweils mindestens einen Vertrauensindex (Cf1/type, Cf2/type, Cf1, Cf2, Cf1', Cf2'),
wobei das Verfahren **dadurch gekennzeichnet ist, dass** die mindestens zwei Bestimmungsmodi (Model, Mode2) ein Vorhersagemodus (Model), der auf einer statistischen Analyse der Hindernisse in der Nähe, die durch Makroobjekte definiert werden, beruht, und ein Detektionsmodus (Mode2), der auf einer Analyse der freien Räume in einem das Kraftfahrzeug umgebenden Bereich beruht, sind.

2. Verfahren nach Anspruch 1, **dadurch gekennzeichnet, dass** der Vorhersagemodus (Mode1) folgende Schritte umfasst:
- Erstellen einer dynamischen Karte (F_M) eines bestimmten Bereichs in der Nähe des Fahrzeugs,
- Erzeugen (Mo_M), Kategorisieren (Mo_C) und Gewichten der Makroobjekte der Karte,
- statistisches Berechnen (Typ) eines Vertrauensindexes (Cf1/type) pro vorhergesagtem Parklückentyp in Abhängigkeit von den Makroobjekten der Karte,
- Bestimmen des vorhergesagten Parklückentyps (type1) in Abhängigkeit von dem höchsten der bestimmten Vertrauensindizes jedes Lückentyps (Cf1/type).

3. Verfahren nach dem vorhergehenden Anspruch, **dadurch gekennzeichnet, dass** der berechnete Vertrauensindex (Cf1/type) von den geometrischen Eigenschaften der Makroobjekte, die als geparkte Fahrzeuge kategorisiert wurden, und von der Gewichtung, die mit dem Abstand der Makroobjekte, die als geparkte Fahrzeuge kategorisiert wurden, zu dem Kraftfahrzeug in Verbindung steht, abhängt.

4. Verfahren nach einem beliebigen der Ansprüche 1 bis 3, **dadurch gekennzeichnet, dass** der Detektionsmodus (Mode2) folgende Schritte umfasst:
- Erstellen einer Karte der freien Räume in einem das Kraftfahrzeug umgebenden Bereich,
- Prüfen, ob es eine Trajektorie gibt, um zu einem detektierten freien Raum zu gelangen,
- Bestimmen (Cal_Cf2) eines Vertrauensindexes für jeden Parklückentyp (Cf2/type) in Abhängigkeit von dem detektierten freien Raum,
- Bestimmen des detektierten Parklückentyps (type2) in Abhängigkeit von dem höchsten der bestimmten Vertrauensindizes jedes Lückentyps (Cf2/type).

5. Verfahren nach dem vorhergehenden Anspruch, **dadurch gekennzeichnet, dass** der bestimmte Vertrauensindex (Cf2/type) von den Abmessungen des freien Raums und/oder den an den freien Raum angrenzenden Hindernissen und/oder der Art der an den freien Raum angrenzenden Hindernisse abhängt.

6. Verfahren nach einem beliebigen der Ansprüche 4 und 5, **dadurch gekennzeichnet, dass** der Schritt des Auswählens (Sel) des Verfahrens ferner die folgenden Schritte umfasst:
- Vergleichen (comp) des vorhergesagten Parklückentyps (type1) mit dem detektierten Parklückentyp (type2),
- wenn die zwei Typen (type1, type2) identisch sind, Auswählen der detektierten Lücke (P12), andernfalls
- Korrigieren jedes Vertrauensindexes (Cf1, Cf2) in Abhängigkeit von Kontextdaten (Context1, Context2) bei der Erstellung jeder der Karten, insbesondere in Abhängigkeit von meteorologischen Informationen,
- Vergleichen der korrigierten Vertrauensindizes (Cf1', Cf2') jedes Lückentyps,
- wenn die detektierte Lücke einen besseren (Cf1'>Cf2') korrigierten Vertrauensindex (Cf2') als die vorhergesagte Lücke (Cf1') aufweist, Auswählen der detektierten Lücke (P12),
- andernfalls Berechnen einer Trajektorie,
- wenn es eine Trajektorie gibt, Auswählen der vorhergesagten Lücke (Pl1),
- andernfalls Fortsetzen (cont) des Verfahrens durch eine Fortbewegung des Fahrzeugs.

7. Computerprogramm, das Anweisungen umfasst, die, wenn sie von einem Prozessor eines Systems nach Anspruch 8 ausgeführt werden, die Umsetzung eines Verfahrens nach einem der Ansprüche 1 bis 6 bewirken.

8. Parkhilfesystem für ein Kraftfahrzeug, wobei das System in das Fahrzeug integriert ist, wobei das System Mittel für Folgendes beinhaltet:
- Bestimmen von Eigenschaften der Umgebung des Kraftfahrzeugs mit Hilfe von Umgebungssensoren des Kraftfahrzeugs,
- Charakterisieren mindestens eines Parklückentyps durch mindestens zwei unterschiedliche Bestimmungsmittel (Model, Mode2), wobei der Lückentyp den schrägen Lückentyp und/oder den Längslückentyp und/oder den Querlückentyp umfasst, wobei das System ferner Mittel für Folgendes umfasst:
- Bewerten mindestens eines Vertrauensindexes, der mit jedem der Bestimmungsmittel in Verbindung steht, (Cf1/type, Cf2/type, Cf1, Cf2, Cf1', Cf2'),
- automatisches Auswählen (Sel) eines Parklückentyps (Pl1, P12) in Abhängigkeit von dem jeweils mindestens einen Vertrauensindex (Cf1/type, Cf2/type, Cf1, Cf2, Cf1', Cf2'),
wobei das System **dadurch gekennzeichnet ist, dass** die mindestens zwei Bestimmungsmodi (Model, Mode2) ein Vorhersagemodus (Model), der auf einer statistischen Analyse der Hindernisse in der Nähe, die durch Makroobjekte definiert werden, beruht, und ein Detektionsmodus (Mode2), der auf einer Analyse der freien Räume in einem das Kraftfahrzeug umgebenden Bereich beruht, sind.

9. System nach dem vorhergehenden Anspruch, **dadurch gekennzeichnet, dass** die Umgebungssensoren, die für das Detektieren einer Lücke und für das Vorhersagen einer Lücke verwendet werden, mindestens ein Ultraschallsensor und mindestens ein Wegaufnehmer sind.

10. Fahrzeug, das ein Hilfesystem nach einem beliebigen der Ansprüche 8 oder 9 umfasst.

## Claims

1. Method for providing assistance with parking a motor vehicle, said method being carried out on board the vehicle and comprising the following steps:
- determining characteristics of the environment of the motor vehicle by means of sensors of the environment of the motor vehicle,
- characterizing at least one type of parking space via at least two different determining modes (Model, Mode2), the type of space comprising angled parking space and/or parallel parking space and/or perpendicular parking space, said method also comprising a step of:
- assessing at least one confidence index associated with each of the determining modes (Cf1/type, Cf2/type, Cf1, Cf2, Cf1', Cf2'),
- selecting (Sel) automatically a type of parking space (Pl1, P12) based on said at least one confidence index (Cf1/type, Cf2/type, Cf1, Cf2, Cf1', Cf2'),
said method being **characterized in that** the at least two determining modes (Model, Mode2) are a predicting mode (Mode1) based on statistical analysis of nearby obstacles defined by macro-objects and a detecting mode (Mode2) based on analysis of free spaces in a region surrounding the motor vehicle.

2. Method according to Claim 1, **characterized in that** the predicting mode (Mode1) comprises steps of:
- generating (F_M) a dynamic map of a defined region in proximity to the vehicle,
- creating (Mo_M), categorizing (Mo_C) and weighting macro-objects of the map,
- computing (Typ) statistically one confidence index (Cf1/type) per type of parking space predicted based on said macro-objects of the map,
- determining the predicted type of parking space (type1) based on the highest of the confidence indices determined for each type of parking space (Cf1/type).

3. Method according to the preceding claim, **characterized in that** the computed confidence index (Cf1/type) is dependent on geometrical characteristics of macro-objects categorized as being parked vehicles and on the weighting, which is related to the distance from said motor vehicle to the macro-objects categorized as being parked vehicles.

4. Method according to any one of Claims 1 to 3, **characterized in that** the detecting mode (Mode2) comprises steps of:
- generating a map of said free spaces in a region surrounding the motor vehicle,
- verifying that a path exists to park in a detected free space,
- determining (Cal_Cf2) a confidence index for each type of parking space (Cf2/type) based on said detected free space,
- determining the detected type of parking space (type2) based on the highest of the confidence indices determined for each type of parking space (Cf2/type).

5. Method according to the preceding claim, **characterized in that** the determined confidence index (Cf2/type) is dependent on the dimensions of the free space and/or on obstacles bordering the free space and/or on the nature of said obstacles bordering the free space.

6. Method according to either one of Claims 4 and 5, **characterized in that** said selecting step (Sel) of the method also comprises steps of:
- comparing (comp) the predicted type of parking space (type1) and the detected type of parking space (type2),
- if the two types (type1, type2) are identical, selecting the detected space (P12), otherwise
- correcting each confidence index (Cf1, Cf2) based on context data (Context1, Context!) of generation of each of the maps, and in particular based on meteorological information,
- comparing the corrected confidence indices (Cf1', Cf2') of each type of space,
- if the detected space has a better (Cf1'>Cf2') corrected confidence index (Cf2') than the predicted space (Cf1'), selecting the detected space (Pl2),
- otherwise, computing a path,
- if a path exists selecting the predicted space (Pl1),
- otherwise continuing (cont) the method by making the vehicle advance.

7. Computer program comprising instructions that, when executed by a processor of a system according to Claim 8, cause a method according to one of Claims 1 to 6 to be implemented.

8. System for providing assistance with parking a motor vehicle, said system being located on board the vehicle, said system comprising means for:
- determining characteristics of the environment of the motor vehicle by means of sensors of the environment of the motor vehicle,
- characterizing at least one type of parking space via at least two different determining means (Model, Mode2), the type of space comprising angled parking space and/or parallel parking space and/or perpendicular parking space, said system also comprising means for:
- assessing at least one confidence index associated with each of the determining means (Cf1/type, Cf2/type, Cf1, Cf2, Cf1', Cf2'),
- selecting (Sel) automatically a type of parking space (Pl1, P12) based on said at least one confidence index (Cf1/type, Cf2/type, Cf1, Cf2, Cf1', Cf2'),
said system being **characterized in that** the at least two determining modes (Model, Mode2) are a predicting mode (Mode1) based on statistical analysis of nearby obstacles defined by macro-objects and a detecting mode (Mode2) based on analysis of free spaces in a region surrounding the motor vehicle.

9. System according to the preceding claim, **characterized in that** the environmental sensors used to detect a space and to predict a space are at least one ultrasound sensor and at least one odometry sensor.

10. Vehicle comprising a system for providing assistance according to either one of Claims 8 and 9.
